# EUROPEAN PATENT SPECIFICATION

(11) **EP 3 744 664 B1**
(45) Date of publication and mention of the grant of the patent: **29.11.2023**
(21) Application number: 19743982.1
(22) Date of filing: 28.01.2019
(51) Int. Cl.: B62D 65/18, B62D 65/02, B60S 13/00, G01V 5/00

(54) **VEHICLE CONVEYING DEVICE AND SCANNING INSPECTION SYSTEM**
FAHRZEUGFÖRDERVORRICHTUNG UND ABTASTENDES INSPEKTIONSSYSTEM
DISPOSITIF DE TRANSPORT DE VÉHICULE ET SYSTÈME D'INSPECTION À BALAYAGE

(30) Priority: 26.01.2018 CN 201810075149
(43) Date of publication of application: 02.12.2020
(73) Proprietor: Nuctech Company Limited, Beijing 100084 (CN); Tsinghua University, Haidian District Beijing 100084 (CN)
(72) Inventor: WANG, Qiangqiang, Beijing 100084 (CN); LI, Jianmin, Beijing 100084 (CN); SONG, Quanwei, Beijing 100084 (CN); HE, Yuan, Beijing 100084 (CN); LI, Yulan, Beijing 100084 (CN); SHI, Junping, Beijing 100084 (CN); LI, Yuanjing, Beijing 100084 (CN); LI, Hongqi, Beijing 100084 (CN); MENG, Hui, Beijing 100084 (CN); CHEN, Zhiqiang, Beijing 100084 (CN); ZONG, Chunguang, Beijing 100084 (CN); ZHOU, Hejun, Beijing 100084 (CN); ZHANG, Li, Beijing 100084 (CN)
(74) Representative: Meissner Bolte Partnerschaft mbB
(86) International application number: PCT/CN2019/073483
(87) International publication number: WO 2019/144961

(56) References cited:
- WO-A1-2007/013348
- CN-A- 102 530 791
- CN-A- 106 965 635
- CN-A- 108 190 402
- CN-B- 102 107 767
- CN-U- 204 223 708
- CN-U- 207 810 537
- CN-Y- 201 268 301
- JP-A- 2012 020 815
- JP-A- 2012 020 815
- JP-A- 2014 153 235
- JP-A- 2015 001 383

## Description

The present application is based on and claims priority to CN Patent Application No. 201810075149.4 filed on Jan. 26, 2018.

### TECHNICAL FIELD

The present disclosure relates to the field of conveying machinery technology, in particular to a vehicle conveying device and a scanning inspection system.

### BACKGROUND

At present, the conveying device in a fixed scanning inspection system for a large cargo vehicle mainly includes three structural forms : a platform truck conveying structure, a wire rope dragging structure and a holding wheel structure.

The inventors recognize that for the conveying device using a platform truck conveying structure, the inspected vehicle is completely parked on a platform truck provided with a driving mechanism itself, such that the platform truck moves through a scanning area automatically to complete the inspection. Although such conveying manner can drive the inspected vehicle to advance or retreat, the platform truck conveying device involves a huge civil construction. Moreover, since the platform truck is at a certain height from the ground, it takes some time to place the vehicle on the platform truck, and it is difficult to implement a double-vehicle relay for inspection so that there is a low pass rate. In addition, the platform truck cannot be used as a passage when scanning is not performed.

For the conveying device using a wire rope dragging structure, the front and rear ends of the dragging trolley are respectively connected with wire ropes which are arranged around the wire tensioning mechanisms located at the front and rear ends within the inspection passage, such that the lengths of the wire ropes on both ends can be changed by the function of the wire rope tensioning mechanisms, thereby causing the dragging trolley to move reciprocally within the inspection passage, and further drive the inspected vehicle to move reciprocally. Although such structure can also drive the inspected vehicle to advance or retreat, with a poor stability in movement, it is also impossible to implement the use of a double-vehicle relay for inspection so that there is a low pass rate. Moreover, it cannot be used as a passage when scanning is not performed.

For the conveying device using a holding wheel structure, the front wheel of the inspected vehicle is held and lifted off the ground, thereby dragging the inspected vehicle through the scanning area. At present, there are mainly two types of conveying devices using a holding wheel structure. The first type is that the travelling track and the dragging trolley are both arranged on the ground, and the dragging trolley is at a height of nearly 1.1 meters, thereby blocking more of the inspected vehicle during horizontal scanning. The second type is that the travelling track and the trolley are both arranged underground. Although such arrangement does not block the inspected vehicle, there is a huge human construction and a high cost. In addition, these two types of conveying devices can only drive the inspected vehicle to advance but cannot ensure that the vehicle travels along a straight line during retreating. If the vehicle is skewed, it may also hit other objects within the passageway, thus causing damage to other objects.

WO2007013348A1 discloses a transportation facility in which an object transported while being suspended from a hanger such as a trolley conveyor is transferred on to a carriage of a carriage-type transportation device only for a certain section of a route. At the start point of transportation of the carriage-type transportation device, there is provided an object receiving means at the underside of a traveling route of a traveling body of the conveyor. An object support device of the carriage is lifted relative to the hanger of the traveling body, and the object receiving means is caused to receive the object from the hanger. At the end of the transportation is provided an object return means for lowering the object support device relative to the hanger of the traveling body to transfer the object to the hanger. In the transportation route of the carriage-type transportation device, the traveling body is switched to a state in which drive is released and a hanger engagement means of the carriage is engaged with the hanger so that the traveling body can be pulled and moved by the carriage.

JP2012020815A discloses a cable-traction type vehicle conveyor including a traveling rail that is provided in a carriage path which is lower than the traveling surface of a vehicle to be inspected is located outside or inside a front wheel of the vehicle to be inspected, and horizontally extends in a conveying direction; a movable carriage that is located lower than the traveling surface and is movable along the traveling rail; a front-wheel transfer device that is provided on the movable carriage so as to transfer the front wheel of the vehicle to be inspected between the self-propellable position and the transferrable position; and a cable traction device that pulls the movable carriage by a cable so as to move the movable carriage along the traveling rail.

It should be noted that, the information in the portion of the background art of the present disclosure is merely intended to enhance the understanding of the overall background of the present disclosure, and should not be construed as admitting or hinting in any form that the information constitutes the prior art already commonly known by a person skilled in the art.

### SUMMARY

In the embodiments of the present disclosure, a vehicle conveying device and a scanning inspection system are proposed, so that the vehicle conveying device can drive the inspected vehicle to advance and retreat.

According to one aspect of the present disclosure, a vehicle conveying device is provided. The vehicle conveying device includes a conveying platform and a traction device. The conveying platform can be connected to or disconnected from the traction device. When the conveying platform is disconnected from the traction device, the traction device is configured to drive a vehicle to advance or draw the vehicle onto the conveying platform. When the conveying platform is connected to the traction device and the vehicle is placed on the conveying platform, the traction device is configured to drive the conveying platform to advance or retreat, thereby implementing that the vehicle advances or retreats.

In one or more embodiments, an upper surface of the conveying platform is substantially flush with the ground.

In one or more embodiments, the traction device includes a wheel and an elevating mechanism. The carrier is configured to hold a wheel of the vehicle and the elevating mechanism is configured to drive the wheel carrier to ascend so as to drive the wheel to ascend, and the traction device drives the vehicle to advance or draw the vehicle onto the conveying platform after the wheel ascends. Alternatively, the elevating mechanism is configured to drive the wheel carrier to descend, so as to drive the wheel to descend when the vehicle is placed on the conveying platform.

In one or more embodiments, the traction device includes a travelling track, a vehicle body and a cantilever, wherein the vehicle body is configured to travel along the travelling track, the cantilever is mounted on the vehicle body and arranged along a direction parallel to the travelling track, and the wheel carrier and the elevating mechanism are respectively connected to both ends of the cantilever.

In one or more embodiments, the vehicle conveying device includes two traction devices, which are arranged side by side to form a passage for the vehicle to pass therethrough between the two traction devices. The vehicle conveying device further includes a gantry which is connected between the two traction devices.

In one or more embodiments, a connector is provided on the conveying platform, and the traction device includes a locking mechanism configured to lock or unlock the connector, so that the conveying platform is connected to or disconnected from the traction device.

In one or more embodiments, the connector is disposed on one side of the conveying platform, and the traction device is disposed on one side of the connector far away from the conveying platform. The locking mechanism includes a first locking member and a second locking member. The first locking member is configured to be depressed under an inertial impact effect of the connector, so that the connector passes over the first locking member to move in a space between the first locking member and the second locking member. The first locking member can also ascend after the connector leaves the first locking member, so as to restrict movement of the connector by the first locking member and the second locking member.

In one or more embodiments, the locking mechanism further includes a first connecting rod group, a second connecting rod group, and a driving member. The first connecting rod group is connected to the first locking member. The second connecting rod group is connected to the second locking member. The driving member is configured to drive the first connection rod group and the second connecting rod group to move so as to drive the first locking member and the second locking member to ascend, thereby achieving a restricting effect on the connector; or drive the first locking member and the second locking member to descend to release a restricting effect on the connector.

In one or more embodiments, an elastic member is provided between the first locking member and the first connecting rod group.

In one or more embodiments, the vehicle conveying device further includes a guide mechanism for guiding movement of the conveying platform.

In one or more embodiments, the guide mechanism includes a guide wheel and a guide track, such that the guide wheel and the guide track cooperate with each other to guide for the movement of the conveying platform.

In one or more embodiments, the traction device includes a travelling track and a vehicle body travelling along the travelling track. The guide wheel is disposed on a bottom surface of the conveying platform. An upper surface of the conveying platform is substantially flush with the ground. A guide passage arranged to be parallel to the travelling track is provided by digging downward from the ground. The guide wheel and the guide track are located within the guide passage.

In one or more embodiments, the vehicle conveying device further includes a rolling support structure mounted below the conveying platform so as to support the conveying platform, and the conveying platform is movable relative to the ground by rolling of the rolling support structure.

In one or more embodiments, a pit is provided by digging downward from the ground, and the rolling support structure is disposed within the pit.

According to another aspect of the present disclosure, a scanning inspection system is provided. The scanning inspection system includes a detection passage, a ray source, a detector and the vehicle conveying device described above, wherein the vehicle conveying device is configured to drive a vehicle to advance or retreat along the detection passage. The ray source is configured to emit rays capable of penetrate the vehicle. The detector is configured to receive rays that penetrate the vehicle, so as to scan and inspect the vehicle.

According to a further aspect of the present disclosure, a scanning inspection system is proposed. The scanning inspection system includes:
a detection passage;
a conveying platform, arranged in the detection passage; and
a traction device, releasably connected to the conveying platform, and having a connected state connected to the conveying platform and a disconnected state disconnected from the conveying platform; in the disconnected state, the traction device is configured to drive a vehicle to advance or draw the vehicle onto the conveying platform; in the connected state, the traction device is configured to drive the conveying platform and the vehicle located on the conveying platform to advance or retreat.

Based on the above-described technical solution, the embodiments of the present disclosure use a combined structure of the conveying platform and the traction device. The conveying platform can be connected to or disconnected from the traction device. When the conveying platform is disconnected from the traction device, the traction device may drive the vehicle to advance, and may also draw the vehicle onto the conveying platform; after the vehicle is drawn onto the conveying platform, and the conveying platform is connected to the traction device, the traction device may drive the conveying platform to advance or retreat, thereby implementing that the vehicle advances or retreats and satisfying the need that the vehicle is required to return. Moreover, since the vehicle is placed on the conveying platform during retreating, it is possible to ensure that the vehicle retreats according to a preset route and prevents collision with other objects.

Other features and advantages of the present disclosure will become apparent from the following detailed description of exemplary embodiments of the present disclosure with reference to the accompanying drawings.

### BRIEF DESCRIPTION OF THE DRAWINGS

In order to more clearly explain the embodiments of the present disclosure or the technical solutions in the relevant art, a brief introduction will be given below for the accompanying drawings required to be used in the description of the embodiments or the relevant art. It is obvious that, the accompanying drawings illustrated as follows are merely the embodiments of the present disclosure. For those skilled in the art, they may also acquire other accompanying drawings according to the accompanying drawings provided on the premise that no inventive effort is involved.
Fig. 1 is a front view of one embodiment of a vehicle conveying device of the present disclosure.
Fig. 2 is a top view of the vehicle conveying device in an embodiment of Fig. 1.
Fig. 3 is a schematic structural view of a first locking member and a second locking member in a first state in one embodiment of the vehicle conveying device of the present disclosure.
Fig. 4 is a schematic structural view of the first locking member and the second locking member in a second state in one embodiment of the vehicle conveying device of the present disclosure.
Fig. 5 is a schematic structural view of the first locking member and the second locking member in a third state in one embodiment of the vehicle conveying device of the present disclosure.
Fig. 6 is a schematic structural view of the first locking member and the second locking member in a fourth state in one embodiment of the vehicle conveying device of the present disclosure.

In the drawings:
10. vehicle; 20. traction device; 30. conveying platform; 40. gantry;
11. wheel; 21. wheel carrier; 22. locking mechanism; 31. guide wheel; 32. bearing; 33. connector; 221. first locking member; 222. second locking member; 223. first connecting rod group; 224. second connecting rod group.

### DETAILED DESCRIPTION

Next, the technical solution in the embodiments will be explicitly and completely described in combination with the accompanying drawings in the embodiments of the present disclosure. Apparently, the described embodiments are merely part of the embodiments of the present disclosure, rather than all the embodiments. On the basis of the embodiments of the present disclosure, all the other embodiments acquired by a person skilled in the art on the premise that no inventive effort is involved fall into the scope protected by the present disclosure.

In the description of the present disclosure, it is necessary to understand that, the azimuth or positional relations indicated by the terms "center", "transverse", "longitudinal", "front", "rear", "left", "right", "up", "down", "vertical", "horizontal", "top", "bottom", "within", "outside", which are based on the azimuth or positional relations illustrated by the drawings, are only for facilitating description of the present disclosure and simplifying the description, rather than indicating or implying that the device or element referred thereto has to present a particular azimuth, and be constructed and operated in a particular azimuth, so that it cannot be understood as limiting the protection scope of the present disclosure.

In the description of the present disclosure, it is necessary to understand that, the azimuth or positional relations indicated by the terms "center", "transverse", "longitudinal", "front", "rear", "left", "right", "up", "down", "vertical", "horizontal", "top", "bottom", "within", "outside", which are based on the azimuth or positional relations illustrated by the drawings, are only for facilitating description of the present disclosure and simplifying the description, rather than indicating or implying that the device or element referred thereto has to present a particular azimuth, and be constructed and operated in a particular azimuth, so that it cannot be understood as limiting the protection scope of the present disclosure.

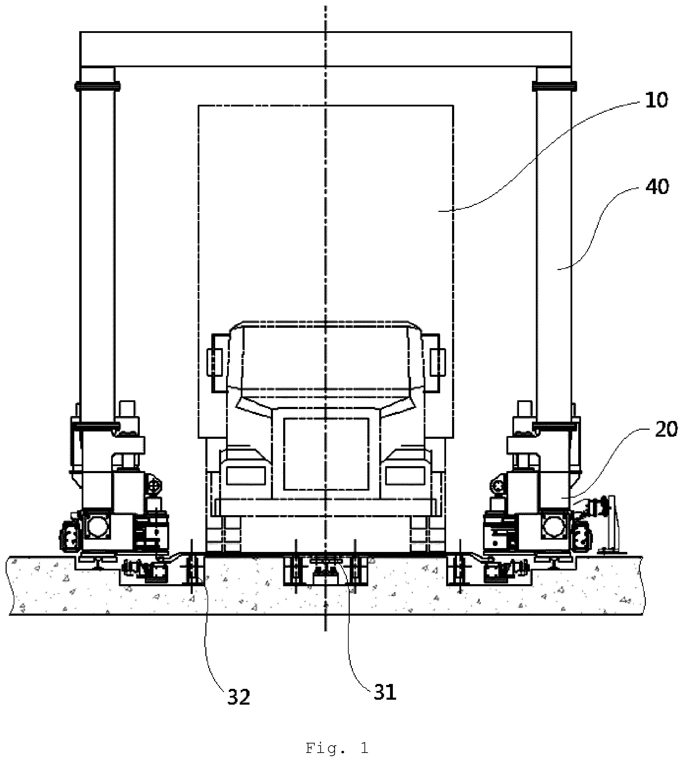

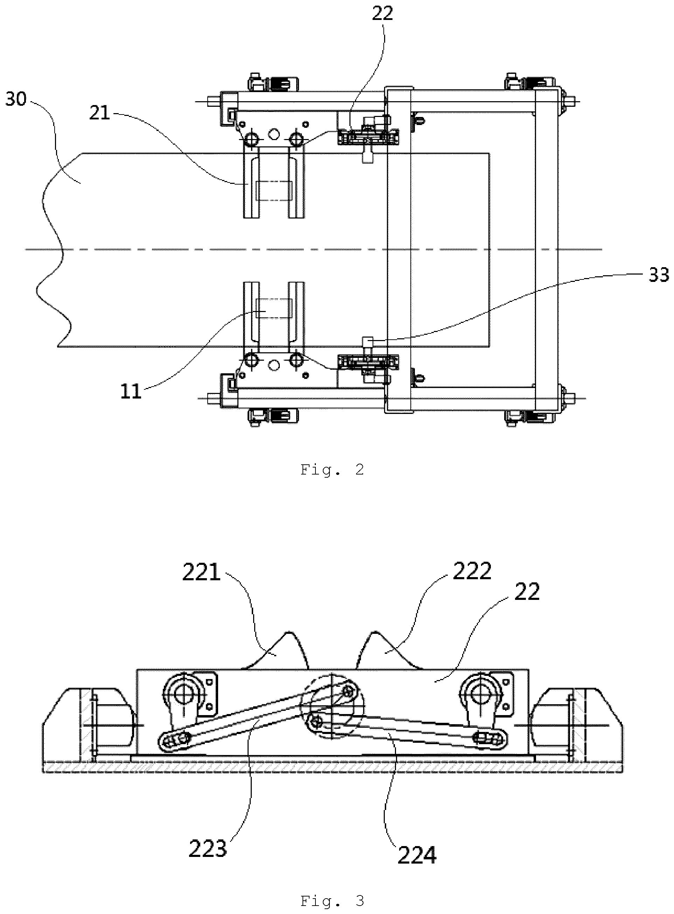

Referring to Figs. 1 and 2, in one exemplary embodiment of the vehicle conveying device provided by the present disclosure, the vehicle conveying device includes a conveying platform 30 and a traction device 20, wherein the conveying platform 30 can be connected to or disconnected from the traction device 20. When the conveying platform 30 is disconnected from the traction device 20, the traction device 20 can drive the vehicle 10 to advance or draw the vehicle 10 to the conveying platform 30. When the conveying platform 30 is connected to the traction device 20 and the vehicle 10 is placed on the conveying platform 30, the traction device 20 can drive the conveying platform 30 to advance or retreat, so as to implement that the vehicle 10 advances or retreats.

In the above-described exemplary embodiment, a combined structure of the conveying platform 30 and the traction device 20 is used. The conveying platform 30 can be connected to or disconnected from the traction device 20. When the conveying platform 30 is disconnected from the traction device 20, the traction device 20 may drive the vehicle 10 to advance or draw the vehicle 10 onto the conveying platform 30. After the vehicle 10 is drawn onto the conveying platform 30, and the conveying platform 30 is connected to the traction device 20, the action device may drive conveying platform 30 to advance or retreat, thereby implementing that the vehicle 10 advances or retreats, and satisfying the need that the vehicle is required to return.

In the above-described exemplary embodiment, the conveying platform 30 itself has no power. After the conveying platform 30 is connected to the traction device 20, the traction device 20 may drive the conveying platform 30 to move. When the vehicle 10 is needed to advance, the conveying platform 30 may or may not be involved. When the conveying platform 30 is disconnected from the traction device 20, the traction device 20 can still independently drive the vehicle 10 to advance. When the conveying platform 30 is connected to the traction device 20, and the vehicle 10 is placed on the conveying platform 30, the traction device 20 may drive the conveying platform 30 so as to drive the vehicle 10 to advance. When the vehicle 10 is required to retreat, there is a need that by means of the conveying platform 30, the traction device 20 drives the conveying platform 30 to retreat so as to drive the vehicle 10 to retreat. Moreover, since the vehicle 10 is placed on the conveying platform 30 during retreating, it is possible to ensure that the vehicle 10 retreats according to a preset route (such as a straight line) and prevent collision with other objects.

For the conveying device using a platform conveying structure in the related art, when it is necessary to perform re-scanning or CT scanning during retreating, two or three passages need to be provided to enable the platform truck to return. However, for the embodiment of the vehicle conveying device of the present disclosure, since retreating can be conveniently effectuated, it is only necessary to provide one passage. Therefore, the structural arrangement is more compact, so that the area occupied by the vehicle conveying device is effectively reduced.

By way of such a structural form that the conveying platform 30 drives the vehicle 10 to advance or retreat, it is possible to improve the stability and reliability in the movement of the vehicle 10.

Further, the upper surface of the conveying platform 30 is substantially flush with the ground. That is, the upper surface of the conveying platform 30 may be flush with the ground or may be slightly higher or slightly lower than the ground. For example, the distance between the upper surface of the conveying platform 30 and the ground is ±10 cm. The advantage of such arrangement is to reduce the height of the conveying platform 30 as much as possible, so that the vehicle 10 can move to the conveying platform 30 more conveniently and rapidly. Compared with the conveying device using a platform conveying structure in the related art, since the height of the conveying platform 30 is reduced, the time for placing the vehicle 10 onto the conveying platform 30 is saved so that it is possible to implement a double-vehicle relay for the inspection and improve the pass rate.

Alternatively, the traction device 20 includes a wheel carrier 21 and an elevating mechanism. The wheel carrier 21 is configured to fix the wheels 11 of the vehicle 10, and the elevating mechanism is configured to drive the wheel carrier 21 to ascend so as to drive the wheels 11 to ascend, and after the wheels 11 are lifted, the traction device 20 drives the vehicle 10 to advance or draw the vehicle 10 onto the conveying platform 30; or, the elevating mechanism is configured to drive the wheel carrier 21 to descend so as to drive the wheels 11 to descend when the vehicle 10 is placed on the conveying platform 30.

By providing the wheel carrier 21, the wheels 11 (such as the front wheels) of the vehicle 10 may be fixed to implement drawing the vehicle 10, to drive the vehicle 10 to advance, or draw the vehicle 10 onto the conveying platform 30. By providing the elevating mechanism, it is possible to land the wheels 11 after the vehicle 10 is drawn onto the conveying platform 30, so that the vehicle 10 is stably placed on the conveying platform 30. Of course, after the vehicle 10 is placed on the conveying platform 30, the wheel carrier 21 may still fix the vehicle 10 to prevent the vehicle 10 from moving relative to the conveying platform 30.

Further, the traction device 20 includes a travelling track, a vehicle body and a cantilever. The vehicle body can travel along the travelling track. The cantilever is mounted on the vehicle body and arranged along a direction parallel to the travelling track. The wheel carrier 21 and the elevating mechanism are respectively connected to both ends of the cantilever. By such arrangement form, it is possible to reduce the blocking of the inspected vehicle 10. Since such structural arrangement blocks the inspected vehicle 10 at a height that is a set height of the wheel carrier 21 (about 420mm), it is possible to favorably avoid the influence on the imaging effect and the imaging range during scanning inspection.

Alternatively, there are two traction devices 20, which are arranged side by side to form a passage for the vehicle 10 to pass between the two traction devices 20. The vehicle conveying device further includes a gantry 40. The gantry 40 is connected to between two traction devices 20. By providing the gantry 40, it is possible to keep a balanced stress of the wheel body 21 when the wheel carrier 21 carries the vehicle 10. The connection using the gantry 40 may also reduce the number of the balance track and simplify the device installation.

The traction device 20 and the gantry 40 form a gantry type trailer device. Such structural form which has an excellent adaptability, is adapted to a plurality of different widths of the detection passage by replacing with a gantry 40 with a different width, while there is no need to make a substantial change to the structure of the traction device 20. Moreover, the traction device 20 and the gantry 40 are both arranged on the ground, with no complicated civil construction involved, so that it is possible to save the cost.

Specifically, the wheel carrier 21 includes two fork arms, which are rotatable relative to the vehicle body. When the wheel 11 is required to fixed, the two fork arms rotate to a direction perpendicular to the travelling track so as to fix the wheel 11 on the vehicle 10. When the wheel 11 is not required to be fixed, the two fork arms rotate to a direction parallel to the travelling track, so as to avoid interference with the advancing of the vehicle 10 and the space between the two fork arms may be used as a passage when scanning is not performed.

Alternatively, the conveying platform 30 is provided with a connector 33, and the traction device 20 includes a locking mechanism 22, which is configured to lock or unlock the connector 33 to implement that the conveying platform 30 is connected to or disconnected from the traction device 20.

Specifically, referring to Figs. 3 to 6, the connector 33 is disposed on one side of the conveying platform 30, and the traction device 20 is disposed on one side of the connector 33 far away from the conveying platform 30. The locking mechanism 22 includes a first locking member 221 and a second locking member 222. Under an inertial impact effect of the connector 33, the first locking member 221 can be depressed so that the connector 33 can cross over the first locking member 221 so as to move in a space between the first locking member 221 and the second locking member 222. The first locking member 221 can also be raised after the connector 33 leaves the first locking member 221, so as to limit the movement of the connector 33 by the first locking member 221 and the second locking member 222.

Specifically, when it is necessary to connect the conveying platform 30 with the traction device 20, the inertial movement of the connector 33 may form an impact effect over the first locking member 221 when the conveying platform 30 reaches a connection position, and when subjected to an impact the first locking member 221 may be depressed so as to provide conditions for continued movement of the connector 33 relative to the traction device 20. Further, when the connector 33 reaches the second locking member 222, the second locking member 222 is fixedly arranged so that the second locking member 222 may block continued movement of the connector 33. At this time, the first locking member 221 has raised and returned to the blocking position. Therefore, by means of he first locking member 221 and the second locking member 222, the connector 33 may be restricted within a gap formed between the first locking member 221 and the second locking member 222. Alternatively, the first locking member 221 and the second locking member 222 may clamp both sides of the connector 33, thereby effectively preventing further movement of the connector 33, that is, the conveying platform 30.

Wherein, the first locking member 221 and the second locking member 222 may be convex blocks with a triangular cross section, and the connector 33 may be a rod-shaped structure with an inverted trapezoidal cross section. The surface by which the connector 33 is in contact with the first locking member 221 and the second locking member 222 is an inclined surface. By such arrangement, it is easier to depress and pass over the first locking member 221 when subjected to an impact.

Further, the locking mechanism 22 further includes a first connecting rod group 223, a second connecting rod group 224 and a driving member, wherein the first connecting rod group 223 is connected to the first locking member 221, the second connecting rod group 224 is connected to the second locking member 222, and the driving member is configured to drive the first connecting rod group 223 and the second connecting rod group 224 to move, so as to drive the first locking member 221 and the second locking member 222 to ascend, thereby realizing a restricting effect on the connector 33; or drive the first locking member 221 and the second locking member 222 to descend so as to release a restricting effect on the connector 33. By providing the first connecting rod group 223 and the second connecting rod group 224, it is possible to adjust the blocking state of the first locking member 221 and the second locking member 222.

The first connecting rod group 223 and the second connecting rod group 224 may include one connecting rod or may include two or more connecting rods. In the embodiments shown in Figs. 3 to 6, the first connecting rod group 223 and the second connecting rod group 224 both include two connecting rods. Among them, the longer first connecting rod in the first connecting rod group 223 and the longer second connecting rod in the second connecting rod group 224 are connected to a round plate, and the driving member may drive the round plate to rotate so as to realize the purpose that the first locking member 221 and the second locking member 222 ascends and descends.

Alternatively, an elastic member, such as a spring, is provided between the first locking member 221 and the first connecting rod group 223. By providing the elastic member, the first locking member 221 automatically ascends when subjected to an impact being depressed and the connector 33 passes over the first locking member 221.

In order to improve the accuracy in movement of the vehicle 10, the vehicle conveying device further includes a guide mechanism for guiding the movement of the conveying platform 30. By providing a guide mechanism, it is possible to not only improve the accuracy of the vehicle 10 during advancing, but also ensure that the vehicle 10 can also move according to a preset route during retreating, which allows a more reliable and safer operation of the entire system.

Specifically, as shown in Fig. 1, the guide mechanism includes a guide wheel 31 and a guide track. The guide wheel 31 and the guide track cooperate with each other to implement guiding the conveying platform 30.

Further, the vehicle conveying device further includes a travelling track along which the traction device 20 travels. The guide wheel 31 is disposed on the bottom surface of the conveying platform 30. The upper surface of the conveying platform 30 is substantially flush with the ground. A guide passage arranged to be parallel to the travelling track is provided by digging downward from the ground. The guide wheel 31 and the guide track are located within the guide passage. By providing the conveying platform 30 at a position substantially flush with the ground, it is possible to reduce the height of the conveying platform 30 as much as possible and reduce the difficulty of drawing the vehicle 10 onto the conveying platform 30. Moreover, it is also possible to minimize the blocking area of the vehicle conveying device over the inspected vehicle and avoid an influence on the imaging during scanning inspection. The guide wheel 31 and the guide track are disposed within the guide passage. That is, the guide wheel 31 and the guide track are located below the ground, which can provide support for providing the conveying platform 30 on the ground.

Alternatively, the vehicle conveying device further includes a rolling support structure, which is mounted below the conveying platform 30 to support the conveying platform 30, and the conveying platform 30 can move relative to the ground by rolling of the rolling support structure. By providing the rolling support structure, it is possible to reduce the friction between the conveying platform 30 and the ground and raise the movement speed of the conveying platform 30.

Specifically, the rolling support structure may include a bearing 32 and a bearing mount. The bearing 32 is mounted on the bearing mount, and the conveying platform 30 is mounted above the bearing 32. By rotation of the bearing 32 relative to the bearing mount, it is possible to drive the conveying platform 30 to move relative to the ground.

Further, a pit is provided by digging downward from the ground, wherein the rolling support structure is disposed within the pit. By such arrangement, it is also possible to provide support for setting the conveying platform 30 on the ground, to reduce the installation height of the conveying platform 30, and to reduce the blocking of the inspected vehicle.

Wherein, the above-described pit may be the above-described guide passage. That is, the rolling support structure may be directly disposed within the guide passage for mounting the guide wheel 31. Of course, the pit which is not limited to a guide passage may also be disposed at other positions independently of the guide passage. Moreover, there may be a plurality of pits, which may be arranged independently, or may communicate with each other to form a passage.

The vehicle conveying device in the above-described embodiments may be configured to convey large cargo vehicles, and particularly suitable for use in a fixed radiation scanning inspection system or a CT scanning inspection system.

Based on the vehicle conveying device in each of the above-described embodiments, the present disclosure also provides a scanning inspection system including a detection passage, a ray source, a detector, and the vehicle conveying device described above. The vehicle conveying device is configured to drive the vehicle 10 to advance or retreat along a detection passage, the ray source is configured to emit rays that can penetrate the vehicle 10, and the detector is configured to receive rays that penetrate the vehicle 10, so as to scan and inspect the vehicle 10.

Among them, the ray source and the detector may be relatively arranged on the left and right sides of the vehicle 10 to achieve horizontal scanning; the ray source and the detector may also be relatively arranged above and below the vehicle 10 to achieve vertical scanning.

The positive technical effects possessed by the vehicle conveying device in the above-described embodiments are also applicable to the scanning inspection system and the positive technical effects of the scanning inspection system will not be described in detail here.

The specific structure and operation process of one embodiment of the vehicle conveying device and the scanning inspection system of the present disclosure will be described below in conjunction with Figs. 1 to 6:

As shown in Figs. 1 and 2, the vehicle conveying device is applied in a scanning inspection system and configured to convey the inspected vehicle 10. The vehicle conveying device includes a traction device 20, a conveying platform 30, and a gantry 40. The gantry 40 is connected between two traction devices 20. The traction device 20 is disposed on the ground, and a gantry-type drag device is formed by the gantry 40, so that the traction device 20 may advance or retreat.

The traction device 20 includes a travelling track, a vehicle body, a cantilever, a wheel carrier 21, an elevating mechanism and a locking mechanism 22. The vehicle body can travel along the travelling track. The cantilever is mounted inside the vehicle body, and the cantilever is arranged along a direction parallel to the travelling track. The wheel carrier 21 is connected to both ends of the cantilever respectively along a direction parallel to the travelling track. The locking mechanism 22 is mounted inside the vehicle body and disposed on one side of the cantilever far away from the wheel carrier 21.

A guide wheel 31 is provided on the bottom surface of the conveying platform 30, and a guide passage is provided by digging downward from the ground. A guide track is provided within the guide passage. By cooperating the guide wheel 31 with the guide track, it is possible to guide the movement of the conveying platform 30. A bearing 32 and a bearing mount are provided within the guide passage or within a pit that is additionally provided. The conveying platform 30 can move relative to the ground by the rolling of the bearing 32.

A connector 33 is provided on one side of the conveying platform 30. The conveying platform 30 and the traction device 20 may be connected therebetween by a connector 33 and a locking mechanism 22. The locking mechanism 22 includes a first locking member 221, a second locking member 222, a first connecting rod group 223 connected to the first locking member 221, a second connecting rod group 224 connected to the second locking member 222, and a driving member. By driving the first connecting rod group 223 and the second connecting rod group 224 by the driving member, the first locking member 221 and the second locking member 222 may be driven to ascend or descend. A spring is provided between the first locking member 221 and the first connecting rod group 223. Even if the first locking member 221 is in an ascending state, it may also be depressed when subjected to an impact. The second locking member 222 is rigidly connected to the second connecting rod group 224 and can block the connector 33 when the second locking member 222 is in an ascending state.

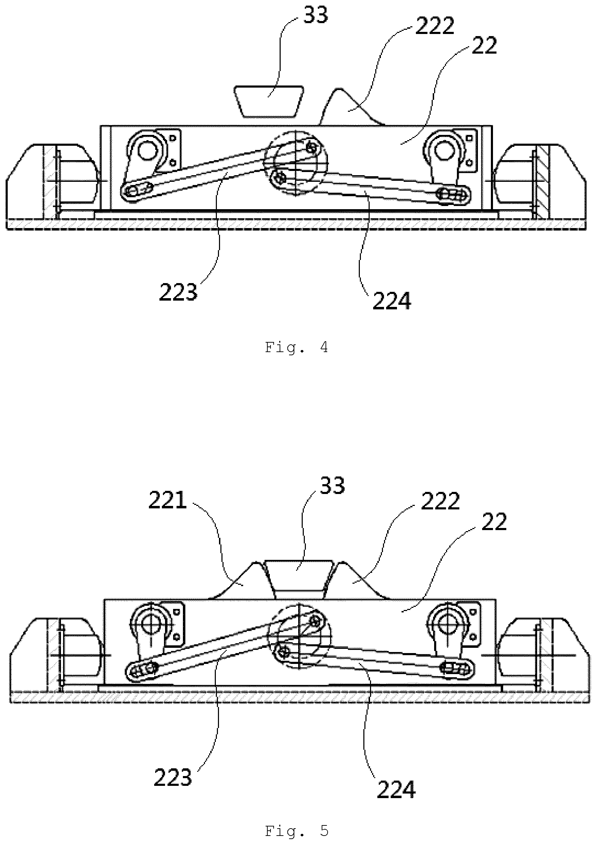

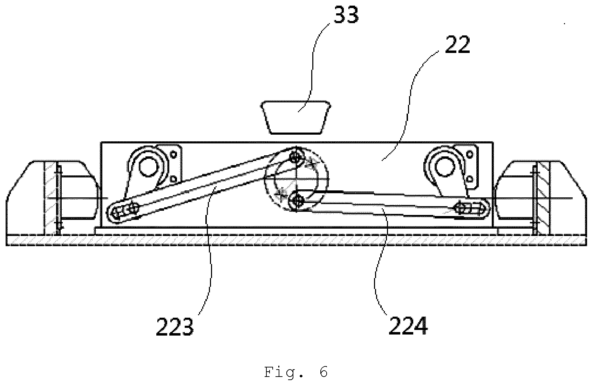

As shown in Fig. 3, when the conveying platform 30 and the traction device 20 are not connected, the first locking member 221 and the second locking member 222 are in an ascending state, that is, the supporting platform for supporting the connector 33 is exposed. As shown in Fig. 4, when the conveying platform 30 moves to a position close to the locking mechanism 22, due to an inertial impact effect, the connector 33 causes the first locking member 221 to be depressed, that is, retracted below the supporting platform, so that the connector 33 passes over the first locking member 221 to reach the second locking member 222, and is blocked by the second locking member 222. As shown in Fig. 5, after the connector 33 passes over the first locking member 221, the first locking member 221 ascends under the effect of an elastic force from the spring. The first locking member 221 and the second locking member 222 tightly clamp the connector 33. As shown in Fig. 6, when disconnection is required, the driving member drives a round plate that connects the first connecting rod group 223 and the second connecting rod group 224 to rotate, so that the first locking member 221 and the second locking member 222 descend, that is, retracted below the surface of the support platform, to release the connector 33, so that the conveying platform 30 is disengaged from the traction device 20.

When the inspected vehicle 10 is conveyed, the conveying platform 30 may be disposed downstream of the detection passage in advance. The conveying platform 30 and the traction device 20 are in a disconnected state. When the inspected vehicle 10 reaches the upstream of the detection passage, the traction device 20 moves to a position close to the inspected vehicle 10. The front wheel of the vehicle 10 is clamped by the wheel carrier 21, and the wheel 11 is elevated by the elevating mechanism. The vehicle 10 may be drawn to advance by the traction device 20, and the scanning inspection is completed when the vehicle passes through the detection passage. If the vehicle 10 is required to return for re-inspection or return for CT inspection, the vehicle 10 is located downstream of the detection passage at this time and drawn by the traction device 20 onto the conveying platform 30. The conveying platform 30 may be connected with the traction device 20 by the connector 33 and the locking mechanism 22. That is, the conveying platform 30 is integrated with the traction device 20. By the driving of the traction device 20, it is possible to drive the conveying platform 30 to retreat, and then drive the inspected vehicle 10 to retreat, so as to perform the next scanning inspection.

Wherein, it should be noted that the initial position of the conveying platform 30 may be flexibly arranged. In addition to arrange it downstream of the detection passage, it may also be arranged upstream of the detection passage. In this way, in order to facilitate retreating of the inspected vehicle 10, it is possible to allow that during advancing, the conveying platform 30 is connected to the traction device 20 and the vehicle 10 is driven to advance by advancing the conveying platform 30. Moreover, during retreating, it is also possible to drive the vehicle 10 to retreat by retreating the conveying platform 30. In this way, the operation is more convenient.

By describing a plurality of embodiments of the vehicle conveying device and the scanning inspection system of the present disclosure, it may be seen that the embodiments of the vehicle conveying device and the scanning inspection system of the present disclosure have at least one or more of the following advantages:
1. The combined structure of the conveying platform and the traction device is used. The conveying platform is connected to or disconnected from the traction device, which facilitates implementing that the vehicle advances and retreats. By achieving a retreating function, it is possible to make the overall structure more compact and effectively reduce the occupied area.
2. The traction device uses a gantry type trailer device that blocks the detected vehicle less, so that it is possible to reduce an influence on the imaging effect and the imaging range, and also to reduce civil construction and save the cost.
3. A guide mechanism is provided below the conveying platform, so that it is possible to guide the movement of the conveying platform and improve the accuracy in advancing and retreating the vehicle, so that the operation of the entire system is more reliable and safer.
4. The conveying platform is disposed at a height substantially flush with the ground, so that it is possible to achieve a double-vehicle relay for inspection and effectively improve the pass rate.

Finally, it should be explained that: the aforementioned embodiments are only configured to describe the technical solution of the present disclosure rather than limiting the same; although detailed explanations are made to the present disclosure by referring to preferred embodiments, a common technical person in the art should understand that: it is still possible to make amendments to the embodiments of the present disclosure or make equivalent replacements to part of the technical features without departing from the scope of the present disclosure, they should all be covered in the scope of the technical solution for which protection is sought in the present disclosure. The invention is solely defined by the appended claims.

## Claims

1. A vehicle conveying device, comprising:
a conveying platform (30); and
a traction device (20), releasably connected to the conveying platform (30), and having a connected state connected to the conveying platform (30) and a disconnected state disconnected from the conveying platform (30); in the disconnected state, the traction device (20) is configured to drive a vehicle (10) to advance or draw the vehicle (10) onto the conveying platform (30) ; in the connected state, the traction device (20) is configured to drive the conveying platform (30) and the vehicle (10) located on the conveying platform (30) to advance or retreat.

2. The vehicle conveying device according to claim 1, wherein an upper surface of the conveying platform (30) is substantially flush with the ground.

3. The vehicle conveying device according to claim 1, wherein the traction device (20) comprises:
a wheel carrier (21), configured to hold a wheel (11) of the vehicle (10); and
an elevating mechanism, configured to drive the wheel carrier (21) to ascend and descend so as to drive the wheel (11) to ascend and descend.

4. The vehicle conveying device according to claim 3, wherein the traction device (20) comprises a travelling track, a vehicle body and a cantilever, wherein the vehicle body is configured to travel along the travelling track, the cantilever is mounted on the vehicle body, the wheel carrier (21) and the elevating mechanism are respectively connected to both ends of the cantilever in a direction parallel to the travelling track, and the wheel carrier (21) is rotatable relative to the vehicle body, so as to rotate to a direction perpendicular to the travelling track to clamp the wheel (11).

5. The vehicle conveying device according to claim 1, further comprising a gantry (40) and two traction devices (20), wherein the two traction devices (20) are arranged side by side to form a passage for the vehicle (10) passing therethrough between the two traction devices (20), wherein the gantry (40) is connected between the two traction devices (20).

6. The vehicle conveying device according to claim 1, wherein a connector (33) is provided on the conveying platform (30), and the traction device (20) comprises a locking mechanism (22) configured to lock or unlock the connector (33), so that the conveying platform (30) is connected to or disconnected from the traction device (20).

7. The vehicle conveying device according to claim 6, wherein the connector (33) is disposed on one side of the conveying platform (30), the traction device (20) is disposed on one side of the connector (33) far away from the conveying platform (30), and the locking mechanism (22) comprises a first locking member (221) and a second locking member (222), wherein the first locking member (221) is configured to be depressed by the connector (33) under an inertial impact effect of the connector (33), so that the connector (33) passes over the first locking member (221) to move in a space between the first locking member (221) and the second locking member (222), and ascend after the connector (33) leaves the first locking member (221), so as to restrict movement of the connector (33) by the first locking member (221) and the second locking member (222).

8. The vehicle conveying device according to claim 7, wherein the locking mechanism (22) further comprises a first connecting rod group (223), a second connecting rod group (224), and a driving member, wherein the first connecting rod group (223) is connected to the first locking member (221), the second connecting rod group (224) is connected to the second locking member (222), and the driving member is configured to drive the first connection rod group (223) and the second connecting rod group (224) to move so as to drive the first locking member (221) and the second locking member (222) to ascend, thereby achieving a restricting effect on the connector (33); or drive the first locking member (221) and the second locking member (222) to descend to release a restricting effect on the connector (33).

9. The vehicle conveying device according to claim 8, wherein an elastic member is provided between the first locking member (221) and the first connecting rod group (223).

10. The vehicle conveying device according to claim 1, further comprising a guide mechanism for guiding movement of the conveying platform (30).

11. The vehicle conveying device according to claim 10, wherein , the guide mechanism comprises a guide wheel (31) and a guide track cooperating with each other to guide for movement of the conveying platform (30).

12. The vehicle conveying device according to claim 11, wherein the traction device (20) comprises a travelling track and a vehicle body travelling along the travelling track, the guide wheel (31) is disposed on a bottom surface of the conveying platform (30), an upper surface of the conveying platform (30) is substantially flush with the ground, the guide mechanism comprises a guide passage arranged to be parallel to the travelling track and provided by digging downward from the ground, and the guide wheel (31) and the guide track are located within the guide passage.

13. The vehicle conveying device according to claim 1, further comprising a rolling support structure mounted below the conveying platform (30) so as to support the conveying platform (30), and the conveying platform (30) is movable relative to the ground by rolling of the rolling support structure.

14. A scanning inspection system comprising a detection passage and the vehicle conveying device according to any one of claims 1 to 13, wherein the vehicle conveying device is configured to drive a vehicle (10) to advance or retreat along the detection passage.

15. The scanning inspection system according to claim 14, further comprising a ray source and a detector, wherein the ray source is configured to emit rays capable of penetrating the vehicle (10), and the detector is configured to receive rays penetrating the vehicle (10) so as to scan and inspect the vehicle (10).

## Patentansprüche

1. Fahrzeugtransportvorrichtung, die Folgendes umfasst:
eine Transportplattform (30) und
eine Zugkraftvorrichtung (20), die mit der Transportplattform (30) lösbar verbunden ist und einen verbundenen Zustand, in dem sie mit der Transportplattform (30) verbunden ist, und einen getrennten Zustand, in dem sie von der Transportplattform (30) getrennt ist, aufweist; wobei die Zugkraftvorrichtung (20) im getrennten Zustand ist konfiguriert, ein Fahrzeug (10) anzutreiben, um das Fahrzeug (10) auf die Transportplattform (30) vorzurücken oder zu ziehen; und die Zugkraftvorrichtung (20) im verbundenen Zustand konfiguriert ist, die Transportplattform (30) und das Fahrzeug (10), das auf der Transportplattform (30) angeordnet ist, anzutreiben, um vorzurücken oder zurückzuweichen.

2. Fahrzeugtransportvorrichtung nach Anspruch 1, wobei eine obere Oberfläche der Transportplattform (30) mit dem Boden im Wesentlichen bündig ist.

3. Fahrzeugtransportvorrichtung nach Anspruch 1, wobei die Zugkraftvorrichtung (20) Folgendes umfasst:
einen Radträger (21), der konfiguriert ist, ein Rad (11) des Fahrzeugs (10) zu halten; und
einen Hubmechanismus, der konfiguriert ist, den Radträger (21) anzutreiben, anzusteigen und abzusinken, um das Rad (11) anzutreiben, anzusteigen und abzusinken.

4. Fahrzeugtransportvorrichtung nach Anspruch 3, wobei die Zugkraftvorrichtung (20) eine Fahrstrecke, eine Fahrzeugkarosserie und einen Ausleger umfasst, die Fahrzeugkarosserie konfiguriert ist, entlang der Fahrstrecke zu fahren, der Ausleger an der Fahrzeugkarosserie montiert ist, der Radträger (21) und der Hubmechanismus jeweils mit beiden Enden des Auslegers in einer Richtung parallel zur Fahrstrecke verbunden sind und der Radträger (21) in Bezug auf die Fahrzeugkarosserie drehbar ist, um sich zu einer Richtung senkrecht zur Fahrstrecke zu drehen, um das Rad (11) einzuspannen.

5. Fahrzeugtransportvorrichtung nach Anspruch 1, die ferner ein Portal (40) und zwei Zugkraftvorrichtungen (20) umfasst, wobei die zwei Zugkraftvorrichtungen (20) nebeneinander angeordnet sind, um einen Durchgang für das Fahrzeug (10), das ihn zwischen den zwei Zugkraftvorrichtungen (20) durchläuft, zu bilden, und das Portal (40) zwischen den zwei Zugkraftvorrichtungen (20) verbunden ist.

6. Fahrzeugtransportvorrichtung nach Anspruch 1, wobei ein Verbinder (33) an der Transportplattform (30) vorgesehen ist und die Zugkraftvorrichtung (20) einen Verriegelungsmechanismus (22) umfasst, der konfiguriert ist, den Verbinder (33) zu verriegeln oder zu entriegeln, derart, dass die Transportplattform (30) mit der Zugkraftvorrichtung (20) verbunden oder von ihr getrennt ist.

7. Fahrzeugtransportvorrichtung nach Anspruch 6, wobei der Verbinder (33) auf einer Seite der Transportplattform (30) angeordnet ist, die Zugkraftvorrichtung (20) auf einer Seite des Verbinders (33) weit von der Transportplattform (30) entfernt angeordnet ist und der Verriegelungsmechanismus (22) ein erstes Verriegelungselement (221) und ein zweites Verriegelungselement (222) umfasst, wobei das erste Verriegelungselement (221) konfiguriert ist, durch den Verbinder (33) unter einer Trägheitseinwirkung des Verbinders (33) niedergedrückt zu werden, derart, dass der Verbinder (33) über dem ersten Verriegelungselement (221) passiert, um sich in einen Raum zwischen dem ersten Verriegelungselement (221) und dem zweiten Verriegelungselement (222) zu bewegen, und anzusteigen, nachdem der Verbinder (33) das erste Verriegelungselement (221) verlassen hat, um eine Bewegung des Verbinders (33) durch das erste Verriegelungselement (221) und das zweite Verriegelungselement (222) zu beschränken.

8. Fahrzeugtransportvorrichtung nach Anspruch 7, wobei der Verriegelungsmechanismus (22) ferner eine erste Kurbelstangengruppe (223), eine zweite Kurbelstangengruppe (224) und ein Ansteuerelement umfasst, die erste Kurbelstangengruppe (223) mit dem ersten Verriegelungselement (221) verbunden ist, die zweite Kurbelstangengruppe (224) mit dem zweiten Verriegelungselement (222) verbunden ist und das Ansteuerelement konfiguriert ist, die erste Kurbelstangengruppe (223) und die zweite Kurbelstangengruppe (224) anzutreiben, sich zu bewegen, um das erste Verriegelungselement (221) und das zweite Verriegelungselement (222) anzutreiben, anzusteigen, wodurch eine Beschränkungswirkung auf den Verbinder (33) erreicht wird; oder das erste Verriegelungselement (221) und das zweite Verriegelungselement (222) antreiben, abzusinken, um eine Beschränkungswirkung auf den Verbinder (33) freizugeben.

9. Fahrzeugtransportvorrichtung nach Anspruch 8, wobei ein elastisches Element zwischen dem ersten Verriegelungselement (221) und der ersten Kurbelstangengruppe (223) vorgesehen ist.

10. Fahrzeugtransportvorrichtung nach Anspruch 1, die ferner einen Führungsmechanismus zum Führen einer Bewegung der Transportplattform (30) umfasst.

11. Fahrzeugtransportvorrichtung nach Anspruch 10, wobei der Führungsmechanismus ein Führungsrad (31) und eine Führungsbahn umfasst, die miteinander zusammenwirken, um eine Bewegung der Transportplattform (30) zu führen.

12. Fahrzeugtransportvorrichtung nach Anspruch 11, wobei die Zugkraftvorrichtung (20) eine Fahrstrecke und eine Fahrzeugkarosserie, die entlang der Fahrstrecke fährt, umfasst, wobei das Führungsrad (31) an einer Bodenoberfläche der Transportplattform (30) angeordnet ist, eine obere Oberfläche der Transportplattform (30) mit dem Boden im Wesentlichen bündig ist, der Führungsmechanismus einen Führungsdurchgang umfasst, der derart angeordnet ist, dass er zur Fahrstrecke parallel und durch Ausheben vom Boden nach unten vorgesehen ist, und das Führungsrad (31) und die Führungsbahn im Führungsdurchgang angeordnet sind.

13. Fahrzeugtransportvorrichtung nach Anspruch 1, die ferner eine Rollträgerstruktur umfasst, die unter der Transportplattform (30) montiert ist, um die Transportplattform (30) zu tragen, wobei die Transportplattform (30) in Bezug auf die Boden durch Rollen der Rollträgerstruktur beweglich ist.

14. Abtastuntersuchungssystem, das einen Detektionsdurchgang und die Fahrzeugtransportvorrichtung nach einem der Ansprüche 1 bis 13 umfasst, wobei die Fahrzeugtransportvorrichtung konfiguriert ist, ein Fahrzeug (10) anzutreiben, um entlang des Detektionsdurchgangs vorzurücken oder zurückzuweichen.

15. Abtastuntersuchungssystem nach Anspruch 14, das ferner eine Strahlquelle und einen Detektor umfasst, wobei die Strahlquelle konfiguriert ist, Strahlen abzustrahlen, die das Fahrzeug (10) durchdringen können, und der Detektor konfiguriert ist, Strahlen zu empfangen, die das Fahrzeug (10) durchdringen, um das Fahrzeug (10) abzutasten und zu untersuchen.

## Revendications

1. Dispositif de convoyage de véhicule, comprenant :
une plateforme de convoyage (30) ; et
un dispositif de traction (20), connecté de manière libérable à la plateforme de convoyage (30), et ayant un état connecté qui est connecté à la plateforme de convoyage (30) et un état déconnecté qui est déconnecté de la plateforme de convoyage (30) ; dans l'état déconnecté, le dispositif de traction (20) est configuré pour amener un véhicule (10) à avancer ou pour tirer le véhicule (10) jusque sur la plateforme de convoyage (30) ; dans l'état connecté, le dispositif de traction (20) est configuré pour amener la plateforme de convoyage (30) et le véhicule (10) situé sur la plateforme de convoyage (30) à avancer ou reculer.

2. Dispositif de convoyage de véhicule selon la revendication 1, dans lequel une surface supérieure de la plateforme de convoyage (30) est sensiblement en affleurement avec le sol.

3. Dispositif de convoyage de véhicule selon la revendication 1, dans lequel le dispositif de traction (20) comprend :
un support de roue (21), configuré pour tenir une roue (11) du véhicule (10) ; et
un mécanisme d'élévation, configuré pour amener le support de roue (21) à monter et descendre de manière à amener la roue (11) à monter et descendre.

4. Dispositif de convoyage de véhicule selon la revendication 3, dans lequel le dispositif de traction (20) comprend une piste de déplacement, un corps de véhicule et un cantilever, dans lequel le corps de véhicule est configuré pour se déplacer le long de la piste de déplacement, le cantilever est monté sur le corps de véhicule, le support de roue (21) et le mécanisme d'élévation sont respectivement connectés aux deux extrémités du cantilever dans une direction parallèle à la piste de déplacement, et le support de roue (21) peut être mis en rotation relativement au corps de véhicule, de manière à faire une rotation dans une direction perpendiculaire à la piste de déplacement pour serrer la roue (11).

5. Dispositif de convoyage de véhicule selon la revendication 1, comprenant en outre un portique (40) et deux dispositifs de traction (20), dans lequel les deux dispositifs de traction (20) sont agencés côte à côte pour former un passage pour que le véhicule (10) passe à travers celui-ci entre les deux dispositifs de traction (20), dans lequel le portique (40) est connecté entre les deux dispositifs de traction (20).

6. Dispositif de convoyage de véhicule selon la revendication 1, dans lequel un connecteur (33) est prévu sur la plateforme de convoyage (30), et le dispositif de traction (20) comprend un mécanisme de blocage (22) configuré pour bloquer ou débloquer le connecteur (33) de telle sorte que la plateforme de convoyage (30) est connectée au dispositif de traction (20) ou est déconnectée de celui-ci.

7. Dispositif de convoyage de véhicule selon la revendication 6, dans lequel le connecteur (33) est disposé sur un côté de la plateforme de convoyage (30), le dispositif de traction (20) est disposé sur un côté du connecteur (33) en éloignement de la plateforme de convoyage (30), et le mécanisme de blocage (22) comprend un premier élément de blocage (121) et un second élément de blocage (222), le premier élément de blocage (121) et un second élément de blocage (222), le premier élément de blocage (221) étant configuré pour être enfoncé par le connecteur (33) sous un effet d'impact d'inertie du connecteur (33), de telle sorte que le connecteur (33) passe pardessus le premier élément de blocage (221) pour se déplacer dans un espace entre le premier élément de blocage (221) et le second élément de blocage (222), et pour remonter après que le connecteur (33) quitte le premier élément de blocage (221) de manière à restreindre un déplacement du connecteur (33) par le premier élément de blocage (221) et le second élément de blocage (222).

8. Dispositif de convoyage de véhicule selon la revendication 7, dans lequel le mécanisme de blocage (22) comprend en outre un premier groupe de tiges de connexion (223), un second groupe de tiges de connexion (224), et un élément d'entraînement, dans lequel le premier groupe de tiges de connexion (223) est connecté au premier élément de blocage (221), le second groupe de tiges de connexion (224) est connecté au second élément de blocage (222), et l'élément d'entraînement est configuré pour amener le premier groupe de tiges de connexion (223) et le second groupe de tiges de connexion (224) à se déplacer de manière à amener le premier élément de blocage (221) et le second élément de blocage (222) à monter, obtenant ainsi un effet de restriction sur le connecteur (33) ; ou pour amener le premier élément de blocage (221) et le second élément de blocage (222) à descendre pour annuler un effet de restriction sur le connecteur (33).

9. Dispositif de convoyage de véhicule selon la revendication 8, dans lequel un élément élastique est prévu entre le premier élément de blocage (221) et le premier groupe de tiges de connexion (223).

10. Dispositif de convoyage de véhicule selon la revendication 1, comprenant en outre un mécanisme de guidage destiné à guider un mouvement de la plateforme de convoyage (30).

11. Dispositif de convoyage de véhicule selon la revendication 10, dans lequel le mécanisme de guidage comprend une roue de guidage (31) et une piste de guidage coopérant l'une avec l'autre pour guider un mouvement de la plateforme de convoyage (30).

12. Dispositif de convoyage de véhicule selon la revendication 11, dans lequel le dispositif de traction (20) comprend une piste de déplacement et un corps de véhicule se déplaçant le long de la piste de déplacement, la roue de guidage (31) est disposée sur une surface de fond de la plateforme de convoyage (30), une surface supérieure de la plateforme de convoyage (30) est sensiblement en affleurement avec le sol, le mécanisme de guidage comprend un passage de guidage agencé pour être parallèle à la piste de déplacement et prévu en creusant vers le bas à partir du sol, et la roue de guidage (31) et la piste de guidage sont situées à l'intérieur du passage de guidage.

13. Dispositif de convoyage de véhicule selon la revendication 1, comprenant en outre une structure de soutien de roulement montée en dessous de la plateforme de convoyage (30) de manière à soutenir la plateforme de convoyage (30) et la plateforme de convoyage (30) peut être déplacée relativement au sol par roulement sur la structure de soutien de roulement.

14. Système d'inspection par balayage comprenant un passage de détection et le dispositif de convoyage de véhicule selon l'une quelconque des revendications 1 à 13, dans lequel le dispositif de convoyage de véhicule est configuré pour amener un véhicule (10) à avancer ou reculer le long du passage de détection.

15. Système d'inspection par balayage selon la revendication 14, comprenant en outre une source de rayons et un détecteur, dans lequel la source de rayons est configurée pour émettre des rayons capables de pénétrer dans le véhicule (10), et le détecteur est configuré pour recevoir des rayons pénétrant dans le véhicule (10) de manière à balayer et à inspecter le véhicule (10).
